# EUROPEAN PATENT SPECIFICATION

(11) **EP 4 065 626 B1**
(45) Date of publication and mention of the grant of the patent: **03.06.2026**
(21) Application number: 20797005.4
(22) Date of filing: 06.10.2020
(51) Int. Cl.: C08G 59/22, C08G 59/50, C08G 59/62, C08G 59/68, C08K 3/22, C09J 163/00, C08K 3/26

(54) **EPOXY BASED THERMAL INTERFACE MATERIAL**
EPOXID-BASIERTES MATERIAL FÜR THERMISCHE SCHNITTSTELLEN
MATÉRIAU D'INTERFACE THERMIQUE À BASE D'ÉPOXY

(30) Priority: 26.11.2019 US 201962940336 P
(43) Date of publication of application: 05.10.2022
(73) Proprietor: DDP Specialty Electronic Materials US, LLC, Wilmington, DE 19805 (US)
(72) Inventor: GRUNDER, Sergio, 8807 Freienbach (CH); LUTZ, Sophie, 8807 Freienbach (CH); LUTZ, Andreas, 8807 Freienbach (CH); HILLESHEIM, Nina, 8807 Freienbach (CH); KOCH, Felix, 8807 Freienbach (CH)
(74) Representative: Abitz & Partner
(86) International application number: PCT/US2020/054397
(87) International publication number: WO 2021/108035

(56) References cited:
- EP-A1- 2 546 872
- WO-A1-2018/154832
- WO-A1-2019/070819
- WO-A2-2019/155327
- US-B2- 9 540 550

## Description

### FIELD OF DISCLOSURE

The disclosure relates to thermal interface materials and their use in battery powered vehicles.

### BACKGROUND

Compare to traditional modes of travel, battery powered vehicles offer significant advantages, such as light weight, reduced CO₂ emission, etc. However, to ensure optimal use of the technology, a number of technological problems still need to be overcome. For example, one current effort in the industry is to increase the driving range of battery powered vehicles by developing batteries with higher density. And this leads to the need to develop better thermal management systems for high density batteries.

In battery powered vehicles, battery cells or modules are thermally connected to cooling units by thermal interface materials (TIM). Such TIM are typically formed of polymeric materials filled with thermally conductive fillers. To achieve a thermal conductivity of 2 W/m·K or higher, fillers with thermal conductivity of 100 W/m·K or higher, such as boron nitrides or aluminum powders, may be used. However, such fillers are expensive and abrasive. A cheaper and non-abrasive alternative is aluminum trihydroxide (ATH). Due to a lower thermal conductivity of about 10 W/m·K, high loadings of ATH (i.e., 80 wt% or higher) are needed. Additionally, it is very much desirable that the TIM also are thermal stable. WO 2018/154832 describes a thermally conductive sheet formed from a curable resin composition, prepared from an epoxy compound (A) having a polyether structure other than a polyethylene glycol structure or a (meth) acrylic structure, an amine compound (B), and a thermally conductive filler (C), which may be ATH. WO 2019/070819 describes curable compositions that include an epoxy composition and a polyamide composition, optionally together with a filler.

### SUMMARY

Disclosed herein are 2-component epoxy-based thermal interface material (TIM) compositions prepared by combining an epoxy resin composition A and a hardening composition B, wherein, (i) the epoxy resin composition A comprises at least one liquid epoxy resin that is free of aromatic groups; (ii) the hardening composition B comprises at least one curing agent; (iii) the volume ratio between the epoxy resin composition A and the hardening composition B ranges from about 1:10 - 10:1; and (iv) the epoxy resin composition A, the hardening composition B, or both further comprises aluminum trihydroxide (ATH), such that the ATH is comprised in the TIM composition at a level of about 80-95 wt%, based on the total weight of the TIM composition, and wherein the epoxy resin composition A, the hardening composition B, or both further comprise about 1-10 wt% precipitated calcium carbonate.

In a further embodiment of the TIM composition, the volume ratio between the epoxy resin composition A and the hardening composition B is about 1:2 - 2:1.

In a yet further embodiment of the TIM composition, the at least one liquid epoxy resin is selected from epoxide ethers having an epoxy equivalent weight (EEW) of about 200-500 g/eq.

In a yet further embodiment of the TIM composition, the at least one liquid epoxy resin is selected from epoxide ethers having a weight average molecular weight of 400-800.

In a yet further embodiment of the TIM composition, the at least one curing agent is selected from the group consisting of polymeric amines, polymeric amides, low molecular weight amines, and combinations of two or more thereof.

In a yet further embodiment of the TIM composition, about 80-95 wt% of ATH is comprised in the epoxy resin composition A, based on the total weight of the epoxy resin composition A; and about 80-95 wt% of ATH is comprised in the hardening composition B, based on the total weight of the hardening composition B.

In a yet further embodiment of the TIM composition, the epoxy resin composition A, the hardening composition B, or both further comprise at least one curing accelerator.

In a yet further embodiment of the TIM composition, the at least one curing accelerator is a compound selected from the group consisting of tertiary amines, organotin catalysts, ammonium salts, phenolic catalysts, urea based catalysts, and mixtures thereof.

In a yet further embodiment of the TIM composition, the at least one curing accelerator is comprised at a level of about 0.01-5 wt%, based on the total weight of the TIM composition.

In a yet further embodiment of the TIM composition, the ATH has an average particle size ranging from about 5-100 µm.

In a yet further embodiment of the TIM composition, the ATH has a multi-modal particle size distribution.

Further disclosed herein are articles comprising the TIM composition recited described above.

In a further embodiment of the article, it further comprises a battery module that is formed of one or more battery cells and a cooling unit, wherein, the battery module is connected to the cooling unit via the TIM composition.

### DETAILED DESCRIPTION

As known in the art, in a 2-component epoxy adhesive, curing can take place at ambient conditions, such that the adhesive comprises at least two different compositions (the epoxy resin composition and the hardening composition), which are kept separate until use. The epoxy resin composition generally contains one or more epoxy resins as well as other ingredients and additives for various reasons. While, the hardening composition generally contains one or more hardening or curing agents. The hardening composition also generally contains other additives for various reasons. The hardening composition generally does not comprise an epoxy resin. In addition, at least one hardening accelerator or catalyst (which enables hardening at non-elevated temperatures) is preferably included in the epoxy resin composition or the hardening composition or both.

Disclosed herein are 2-component epoxy-based thermal interface material (TIM) compositions, which are prepared by combining an epoxy resin composition A and a hardening composition B. The epoxy resin composition A comprises at least one liquid epoxy resin that is free of aromatic groups and the hardening composition B comprises at least one curing agent. In accordance with the present disclosure, the epoxy resin A and the hardening composition B are comprised in the TIM composition at a volume ratio ranging from about 1:10 - 10:1. Moreover, the epoxy resin composition A, the hardening composition B, or both further comprises aluminum trihydroxide (ATH) such that about 80-95 wt% of ATH is comprised in the final 2-component epoxy-based TIM composition, based on the total weight of the TIM composition. In addition, about 1-10 wt% of precipitated calcium carbonate is added into the epoxy resin composition A, the hardening composition B, or both.

The liquid epoxy resins used herein may be any organic compound having at least one oxirane ring, that is polymerizable by a ring opening reaction. Such materials, also known as epoxides, include both monomeric and polymeric epoxides. The liquid epoxy resins used herein do not have aromatic rings and may be, for example, aliphatic, alicyclic, heterocyclic, or cycloaliphatic, and may further be combinations thereof. The liquid epoxy resins used herein are chosen to have low Tg (e.g., lower than room temperature) to provide good tackiness and adhesion. The polymeric epoxides used herein include, without limitation, linear polymers having terminal epoxy groups (for example, a diglycidyl ether of a polyoxyalkylene glycol), polymers having skeletal oxirane units (for example, polybutadiene polyepoxide), and polymers having pendent epoxy groups (for example, a glycidyl methacrylate polymer or copolymer). The weight average molecular weight of the epoxy resins may be about 90-2000, about 200-2000, about 300-1600, about 340-1000, about 400-800, or about 600-700. The epoxy resins may have an epoxy equivalent weight (EEW) of about 100-1000 g/eq, about 150-800 g/eq, about 200-500 g/eq, or about 300-400 g/eq.

Exemplary aliphatic epoxides include, without limitation, polyglycidyl ethers of aliphatic polyhydric alcohols or allylene oxide adducts thereof; polyglycidyl esters of aliphatic long-chain polybasic acids; homopolymers synthesized by vinyl polymerization of glycidyl acrylate or glycidyl methacrylate; and copolymers synthesized by vinyl polymerization of glycidyl acrylate or glycidyl methacrylate and other vinyl monomers. More specific examples include, without limitation, glycidyl ethers of polyhydric alcohols, such as 1,4-butanediol diglycidyl ether, 1,6-hexanediol diglycidyl ether, glycerol triglycidyl ether, trimethylolpropane triglycidyl ether, sorbitol tetraglycidyl ether, dipentaerythritol hexaglycidyl ether, polyethylene glycol diglycidyl ether, and polypropylene glycol diglycidyl ether; polyether polyol polyglycidyl ethers obtained by adding one or more alkylene oxides to aliphatic polyhydric alcohols, such as propylene glycol, trimethylolpropane, and glycerol; and diglycidyl esters of aliphatic long-chain dibasic acids. Also included may be monoglycidyl ethers of aliphatic higher alcohols, monoglycidyl ethers of phenol, cresol, butyl phenol or a polyether alcohol thereof obtained by addition of an alkylene oxide, glycidyl esters of higher fatty acids, epoxidized soybean oil, octyl epoxystearate, butyl epoxystearate, and epoxidized polybutadiene.

Exemplary alicyclic epoxy compounds include polyglycidyl ethers of polyhydric alcohols having at least one alicyclic ring and cyclohexene oxide- or cyclopentene oxide-containing compounds obtained by epoxidizing cyclohexene ring- or cyclopentene ring-containing compounds with an oxidizing agent.

The liquid epoxy resins used herein also may be selected from commercially available products. For example, glycidyl ethers of polyetherpolyols, such as D.E.R. ^{™} 732, D.E.R. ^{™} 732p, or D.E.R. ^{™} 736 epoxy resins available from The Dow Chemical Company; and Araldite^{™} DY-C from Huntsman.

The hardening composition B comprises at least one curing agent or hardener that is capable of cross-linking with epoxy groups on the epoxy resin. Any curing agent or hardener, e.g., suitable for 2-component epoxy, may be used. Exemplary curing agents include, without limitation, polymeric amines, polymeric amides, low molecular weight amines, and combinations of two or more thereof.

Suitable polymeric amine may be any polyamine that has at least two reactive -NH groups, that is they may have at least one primary amine (-NH₂) group or at least two secondary amine (-NH) groups, or combinations thereof. Exemplary polyamines include polyether diamines, polyether triamines, and mixtures thereof. The polyether amines used herein may be linear or branched and they may have any suitable molecular weights. In one embodiment, the polyether amines may have a molecular weight in the range of about 200-6000, or above 1000, or above 3000.

Suitable commercially available polyether amines include those sold by Huntsman under the Jeffamine trade name. Suitable polyether diamines include Jeffamines in the D, ED, and DR series. These include Jeffamine D-230, D-400, D-2000, D-4000, HK-511, ED-600, ED-900, ED-2003, EDR-148, and EDR-176. Suitable polyether triamines include Jeffamines in the T series. These include Jeffamine T-403, T-3000, and T-5000.

Suitable polyamides include reaction products of a dimerized fatty acid and a polyamine. Examples of such polyamides include those available from Cognis under the trade designations Versamid^{®} 115, Versamid^{®} 125 and Versamid^{®}.

Low molecular weight (non-polymeric) amines also may be comprised in the hardening composition B as curing agents, which function as a cross-linking and/or chain-extending agents and include primary and/or secondary amines.

The low molecular weight amines may have molecular weights at least about 48 g/mol or at least about 60 g/mol, and up to about 300 g/mol, about 250 g/mol, or 200 g/mol. Exemplary low molecular weight amines include, without limitation, triethylenetetramine (TETA), diethylenetriamine (DETA), isophoronediamine (IPDA), and ethylenediamine.

The ATH used herein may be monomodal ATH powders or ATH powders having a multi-modal particle size distribution (e.g., bi-modal, trimodal, and the like). The average particle size of the ATH powders may range from about 5-100 µm. And when multi-modal ATH powders are used, the average particle size of the smallest particles may be less than about 10 µm, while the average particle size of the largest particles may be greater than about 50 µm. Additionally, the ATH powders used herein also may be surface treated with silane, titanate, carboxylates, etc.

In accordance with the present disclosure, the ATH powders may be comprised in the epoxy resin composition A, the hardening composition B, or both. And to form the 2-component epoxy-based TIM composition disclosed herein, the epoxy resin composition A and the hardening composition are combined at a volume ratio ranging from about 1:10 - 10:1, or about 1:4 - 4:1, or about 1:2 - 2:1, or about 1:1 and that the ATH powders are comprised in the epoxy resin composition A, the hardening composition B, or both, in such a way that the final content level of ATH in the TIM composition ranges from about 80-95 wt% or about 80-92 wt%, based on the total weight of the composition.

In one embodiment, each of the epoxy resin composition A and the hardening composition B comprises about 80-95 wt%, or about 80-92 wt% of ATH and the epoxy resin composition A and the hardening composition B are combined at a volume ratio of about 1:1 to form the 2-component epoxy-based TIM composition.

In addition, about 1-10 wt%, or preferably about 2-7 wt%, or about 2-5 wt%, of precipitated calcium carbonate is added into the epoxy resin composition A, the hardening composition B, or both. Without being bound by any particular theory, it is believed that the addition of the optional precipitated calcium carbonate may improve the anti-settling of the ATH.

Moreover, one or more curing accelerators (catalysts) may be comprised in the epoxy resin composition A, the hardening composition B, or both, to speed up the curing of the TIM composition. The curing accelerator preferably work by catalyzing the reaction between the low molecular weight amine and polyamine on the one hand, with the epoxy resin on the other hand. The curing accelerator used herein may include, without limitation, tertiary amines, organotin catalysts, ammonium salts, phenolic catalysts, urea based catalysts, and mixtures thereof. Exemplary tertiary amines include, e.g., tris-2,4,6-dimethylaminomethyl phenol (available from Evonik under the trade name Ancamine K54) and phenol salts of diazabicycloundecene (DBU) (available from Evonik under the trade name Polycat SA 1/10), triethylenediamine (DABCO). Exemplary organotin catalysts include, e.g., dioctyltin dineodecanoate (available from, e.g., Galata Chemicals under the trade name Fomrez UL38). Exemplary ammonium salts include, e.g., tetrabutylammonium bromide. Exemplary urea based catalysts include, e.g., reaction product of isophorondiisocynate and dimethylamine (available from Evonik under the trade name Omicure^{™} U35) and reaction product of methylenediphenyldiisocyanate and dimethylamine).

The curing agents and optional curing accelerators should be used in suitable proportions and amounts to decrease the required curing temperature and enable the combined parts of the 2-component TIM composition to cure at a suitable temperature. The curing temperature is preferably less than about 100°C., more preferably less than 90°C, or 60°C, or 50°C., or 40°C. The TIM compositions preferably cure at ambient temperature, e.g., 20°C or 25°C or therebetween. There is no particular preferred lowest curing temperature. As a general matter, however, curing temperature will generally be above 0°C, 10°C, or 15°C. It is preferred that curing can take place in a range of, e.g., 10°C to 40°C., more preferably 15°C to 35°C. It is permissible to heat the inventive TIM composition, e.g., in order to further reduce curing time or to obtain more complete curing.

In accordance with the present disclosure, the curing accelerators may be comprised in the TIM composition at a level of about 0.01-5 w%, or about 0.05-2.5 wt%, or about 0.1-2 wt%, based on the total weight of the TIM composition.

Furthermore, the epoxy resin composition A may optionally further comprise other suitable additives, such as, plasticizers, stabilizers, adhesion promoters, fillers, colorants, etc. Such optional additives may be present at a level of up to about 10 wt%, or up to about 8 wt%, or up to about 5 wt%, based on the total weight of the epoxy resin composition A.

In accordance with the present disclosure, the 2-component epoxy-based TIM are prepared by combining the epoxy resin composition A and the hardening composition B followed by mixing (e.g., with a static mixer) and curing (preferably at ambient temperature).

Further disclosed herein are battery pack systems in which a cooling unit or plate is coupled to a battery module (formed of one or more battery cells) via the epoxy-based thermal interface paste material described above such that heat can be conducted therebetween. In one embodiment, the battery pack systems are those used in battery powered vehicles.

### EXAMPLES

### Materials

- EP-1 - Epoxy resin, which is a reaction product of epichlorohydrin and polypropylene glycol and having a weight average MW of about 650 and an EEW of about 310-330 g/eq;
- EP-2 - Epoxy resin, which is a reaction product of epichlorohydrin and bisphenol A and having a weight average MW of about 350 and an EEW of about 176-185 g/eq;
- PU-Pre - Aromatic polyisocyanate prepolymer based on toluene diisocynate (TDI), obtained from Covestro;
- Plasticizer - di-C₈-C₁₀ alkyl esters of 1,2-benzenecarboxylic acid obtained from SASOL;
- ATH - bimodally distributed aluminum trihydroxide;
- CaCO₃ - precipitated calcium carbonate obtained from Cary Company;
- Catalyst - dioctyl tin dineodecanoate obtained from Momentive;
- Colorant - green chromophore in epoxy resin.
- Polyamine-1 - Polyoxypropylenediamine with an average molecular weight of approximately 2000, obtained from Huntsman under the trade name Jeffamine^{™} D-2000;
- Polyamine-2 - Polyetheramine (a triamine) with an average molecular weight of approximately 3000, obtained from Huntsman under the trade name Jeffamine^{™} T-3000;
- Accelerator - tris-2,4,6-dimethylaminomethyl phenol obtained Evonik;
- Fatty acid - methyl ester of unsaturated C₁₆-C₁₈ fatty acid;
- Silane - hexadecyltrimethoxysilane;

### Testing Methods

*Press-in Force:* The press-in force of the testing material was measured by compressing the testing material with a 40 mm aluminum cylinder from 5 mm to 0.3 mm thick at 1 mm/s. The force deflection curve was monitored and the force at 0.5 mm was reported.

*Thermal conductivity (TC):* The thermal conductivity of the testing material was measured according to ASTM 5470.

*Vertical Cyclic Bleeding Test:* A sandwich structure comprised of the testing sample (2-component TIM) sandwiched between a layer of e-coated steel sheet and a layer of glass sheet (steel/TIM/glass) was prepared by applying 18 g of TIM between the steel sheet and the glass sheet and compressed (with a spacer) to a thickness of 3 mm. After 48 hours, the sandwich structure was then exposed to a cyclic climate test for 4 weeks, in which each cycle took 12 hours to complete and consisted of 4 hours at -40°C (non-controlled humidity), 4 hours to adjust temperature to 80°C, and 4 hours at 80°C with 80 w% relative humidity. The sandwich panels were then visually inspected after the test and samples with no crack formation, no phase separation, and no sliding were rated as "ok" and otherwise rated "Nok".

*Thermal stability:* The 2-component TIM in each sample was pressed into a 2 mm thick plaque followed by curing at room temperature for 7 days. The cured plaque was placed at 110°C for 7 days followed by visual examination for changes in color and mechanical properties (such as brittleness). And the E-modulus and tensile strength of the samples were measured in accordance with ISO 527-2.

*Pull-out pressure:* Two (2) aluminum cylinders (25 mm diameter) were bonded with the 2-component TIM at a thickness of 0.5 mm and cured for 7 days at 23°C and 50% relative humidity. Then the two cylinders were pulled apart on a Zwick tensiometer with a velocity of 0.5 mm/s and the force deflection curve was measured. The maximum force (at break) was recorded and divided by the area to give the pull-out pressure in MPa.

### Comparative Examples CE1-CE2 and Example E1:

In each of the comparative examples CE1-CE1 and example E1, Composition A and Composition B were separately prepared by mixing the components listed in Table 1. The Press-in force for each of Compositions A and B (non-cured) was measured and recorded. Thereafter, using side-by-side cartridges and a pneumatically powered application gun Compositions A and B were mixed together followed by mixing using a static mixer. The press-in force, thermal conductivity, vertically cyclic bleeding test, thermal stability, and pull-out pressure of the TIM material were measured and results are populated in Table 1.

As demonstrated herein, compared to polyurethane-based TIM, epoxy-based TIM has much improved thermal stability. In addition, the data demonstrates that when epoxy resins with aromatic rings were used, the press-in force of the epoxy resin composition A becomes too high to be useful. In particular, in forming the 2-Component TIM in CE2, the Composition A was applied with a manual application gun using a static mixer but the application required a very long time to complete. In addition, the TIM of CE2 has a much higher modulus (294 MPa) and pull-out pressure (0.2 MPa), which are not useful in thermal interface material application. Moreover, the mechanical properties of the TIM in E1 were maintained even after heat aging at 110°C for 7 days.

**Table 1**

| | CE1 | \| CE2 | E1 |
|---|---|---|---|
| Composition A | | | |
| EP-1 (wt%) | - | - | 8 |
| EP-2 (wt%) | - | 8 | - |
| PU-Pre (wt%) | 8 | - | - |
| Plastisizer (wt%) | 5.75 | 5.75 | 5.75 |
| ATH (wt%) | 83 | 83 | 83 |
| CaCO₃ (wt%) | 3 | 3 | 3 |
| Catalyst (wt%) | 0.15 | 0.15 | 0.15 |
| Colorant (wt%) | 0.1 | 0.1 | 0.1 |
| Total (wt%) | 100 | 100 | 100 |
| | | | |
| Press-in Force of Comp A @ 0.5 mm, initial (N) | ^{a}Not Stable | \| 1061 | 162 |
| | | | |

| Composition B | | | |
|---|---|---|---|
| Polyamine-1 (wt%) | - | 6 | 6 |
| Polyamine-2 (wt%) | - | 3 | 3 |
| Fatty acid (wt%) | - | 3 | 3 |
| Silane (wt%) | - | 1 | 1 |
| ATH (wt%) | - | 83 | 83 |
| CaCO₃ (wt%) | - | 3 | 3 |
| Accelerator (wt%) | - | 1 | 1 |
| | | | |
| Press-in Force of Comp 8 @ 0.5 mm, initial (N) | - | 118 | 118 |
| | | | |

| 2-Component TIM | | | |
|---|---|---|---|
| Press-in Force @ 0.5 mm, initial (N) | ^{b}NA | 291 | 136 |
| Thermal Conductivity λ (W/mk) | ^{b}NA | 2.4 | 2.2 |
| Vertical Cyclic Bleeding Test, 4w climate change | ^{b}NA | Ok | Ok |
| Thermal Stability @ 110°C | ^{b}NA | Ok | Ok |
| E-Modulus after 7d RT cure (MPa) | ^{b}NA | 294 | 13 |
| Tensile strength after 7d RT cure (MPa) | ^{b}NA | 5.02 | 0.3 |
| E-Modulus after 7d 110°C ageing (MPa) | ^{b}NA | 365 | 14 |
| Tensile strength after 7d 110°C ageing (MPa) | ^{b}NA | 6.98 | 0.5 |
| Pull-out pressure (MPa) | ^{b}NA | 0.52 | 0.37 |

| | | | |
|---|---|---|---|
| Notes: a: The composition A of CE1 was not stable, i.e., became solid before any test could be performed. b: Due to the lack of stability for Composition A of CE1, 2-Component TIM was not obtained. | | | |

## Claims

1. A 2-component epoxy-based thermal interface material (TIM) composition prepared by combining an epoxy resin composition A and a hardening composition B, wherein,
(i) the epoxy resin composition A comprises at least one liquid epoxy resin that is free of aromatic groups;
(ii) the hardening composition B comprises at least one curing agent;
(iii) the volume ratio between the epoxy resin composition A and the hardening composition B ranges from about 1:10 - 10:1; and
(iv) the epoxy resin composition A, the hardening composition B, or both further comprises aluminum trihydroxide (ATH), such that the ATH is comprised in the TIM composition at a level of about 80-95 wt%, based on the total weight of the TIM composition,
and wherein the epoxy resin composition A, the hardening composition B, or both further comprise about 1-10 wt% precipitated calcium carbonate.

2. The TIM composition of Claim 1, wherein the volume ratio between the epoxy resin composition A and the hardening composition B is about 1:2 - 2:1.

3. The TIM composition of Claim 1 or 2, wherein the at least one liquid epoxy resin is selected from epoxide ethers having an epoxy equivalent weight (EEW) of about 200-500 g/eq.

4. The TIM composition of any one preceding claim, wherein the at least one curing agent is selected from the group consisting of polymeric amines, polymeric amides, low molecular weight amines, and combinations of two or more thereof.

5. The TIM composition of any one preceding claim, wherein about 80-95 wt% of ATH is comprised in the epoxy resin composition A, based on the total weight of the epoxy resin composition A; and wherein about 80-95 wt% of ATH is comprised in the hardening composition B, based on the total weight of the hardening composition B.

6. The TIM composition of any one preceding claim, wherein the epoxy resin composition A, the hardening composition B, or both further comprise at least one curing accelerator.

7. The TIM composition of Claim 6, wherein the at least one curing accelerator is a compound selected from the group consisting of tertiary amines, organotin catalysts, ammonium salts, phenolic catalysts, urea based catalysts, and mixtures thereof.

8. The TIM composition of Claim 6 or 7, wherein the at least one curing accelerator is comprised at a level of about 0.01-5 wt%, based on the total weight of the TIM composition.

9. The TIM composition of any one preceding claim, wherein, the ATH has a multi-modal particle size distribution.

10. An article comprising the TIM composition recited in any one preceding claim.

11. The article of Claim 10, which further comprises a battery module that is formed of one or more battery cells and a cooling unit, wherein, the battery module is connected to the cooling unit via the TIM composition.

## Patentansprüche

1. Epoxid-basierte 2-Komponenten-Material-, (TIM)-Zusammensetzung für thermische Schnittstellen, die durch Kombinieren einer Epoxidharzzusammensetzung A und einer Härterzusammensetzung B hergestellt wird, wobei
(i) die Epoxidharzzusammensetzung A mindestens ein flüssiges Epoxidharz umfasst, das frei von aromatischen Gruppen ist;
(ii) die Härterzusammensetzung B mindestens ein Aushärtungsmittel umfasst;
(iii) das Volumenverhältnis zwischen der Epoxidharzzusammensetzung A und der Härterzusammensetzung B im Bereich von etwa 1:10-10:1 liegt; und
(iv) die Epoxidharzzusammensetzung A, die Härterzusammensetzung B oder beide weiter Aluminiumtrihydroxid (ATH) umfassen, sodass das ATH in der TIM-Zusammensetzung in einer Menge von etwa 80-95 Gew.-% basierend auf dem Gesamtgewicht der TIM-Zusammensetzung umfasst ist,
und wobei die Epoxidharzzusammensetzung A, die Härterzusammensetzung B oder beide weiter etwa 1-10 Gew.-% ausgefälltes Calciumcarbonat umfassen.

2. TIM-Zusammensetzung nach Anspruch 1, wobei das Volumenverhältnis zwischen der Epoxidharzzusammensetzung A und der Härterzusammensetzung B etwa 1:2 -2:1 beträgt.

3. TIM-Zusammensetzung nach Anspruch 1 oder 2, wobei das mindestens eine flüssige Epoxidharz aus Epoxidethern ausgewählt ist, die ein Epoxidäquivalentgewicht (EEW) von etwa 200-500 g/eq aufweisen.

4. TIM-Zusammensetzung nach einem vorstehenden Anspruch, wobei das mindestens eine Aushärtungsmittel aus der Gruppe bestehend aus polymeren Aminen, polymeren Amiden, niedermolekularen Aminen und Kombinationen von zwei oder mehr davon ausgewählt ist.

5. TIM-Zusammensetzung nach einem vorstehenden Anspruch, wobei etwa 80-95 Gew.-% ATH basierend auf dem Gesamtgewicht der Epoxidharzzusammensetzung A in der Epoxidharzzusammensetzung A, umfasst ist; und wobei etwa 80-95 Gew.-% ATH basierend auf dem Gesamtgewicht der Härterzusammensetzung B in der Härterzusammensetzung B umfasst sind.

6. TIM-Zusammensetzung nach einem vorstehenden Anspruch, wobei die Epoxidharzzusammensetzung A, die Härterzusammensetzung B oder beide weiter mindestens einen Aushärtungsbeschleuniger umfassen.

7. TIM-Zusammensetzung nach Anspruch 6, wobei der mindestens eine Aushärtungsbeschleuniger eine Verbindung ist, die aus der Gruppe bestehend aus tertiären Aminen, Organozinnkatalysatoren, Ammoniumsalzen, Phenolkatalysatoren, Harnstoffkatalysatoren und Gemischen daraus ausgewählt ist.

8. TIM-Zusammensetzung nach Anspruch 6 oder 7, wobei der mindestens eine Aushärtungsbeschleuniger in einer Menge von etwa 0,01-5 Gew.-% basierend auf dem Gesamtgewicht der TIM-Zusammensetzung umfasst ist.

9. TIM-Zusammensetzung nach einem vorstehenden Anspruch, wobei das ATH eine multimodale Partikelgrößenverteilung aufweist.

10. Artikel, der die TIM-Zusammensetzung nach einem vorstehenden Anspruch umfasst.

11. Artikel nach Anspruch 10, der weiter ein Batteriemodul umfasst, das aus einer oder mehreren Batteriezellen und einer Kühleinheit gebildet ist, wobei das Batteriemodul über die TIM-Zusammensetzung mit der Kühleinheit verbunden ist.

## Revendications

1. Composition de matériau d'interface thermique (TIM) à base d'époxy à 2 composants préparée en combinant une composition de résine époxy A et une composition durcissante B, dans laquelle,
(i) la composition de résine époxy A comprend au moins une résine époxy liquide exempte de groupes aromatiques ;
(ii) la composition durcissante B comprend au moins un agent de durcissement ;
(iii) le rapport volumique entre la composition de résine époxy A et la composition durcissante B varie d'environ 1:10-10:1 ; et
(iv) la composition de résine époxy A, la composition durcissante B, ou les deux comprennent en outre du trihydroxyde d'aluminium (ATH), de sorte que l'ATH soit présent dans la composition TIM à un niveau d'environ 80-95 % en poids, sur la base du poids total de la composition TIM,
et dans laquelle la composition de résine époxy A, la composition durcissante B, ou les deux comprennent en outre environ 1 à 10 % en poids de carbonate de calcium précipité.

2. Composition TIM selon la revendication 1, dans laquelle le rapport volumique entre la composition de résine époxy A et la composition durcissante B est d'environ 1:2 -2:1.

3. Composition TIM selon la revendication 1 ou 2, dans laquelle la au moins une résine époxy liquide est choisie parmi les éthers époxy présentant un poids équivalent époxy (EEW) d'environ 200 à 500 g/éq.

4. Composition TIM selon une quelconque revendication précédente, dans laquelle l'au moins un agent de durcissement est choisi parmi le groupe constitué d'amines polymères, d'amides polymères, d'amines de faible poids moléculaire et de combinaisons de deux ou plusieurs de ces agents.

5. Composition TIM selon une quelconque revendication précédente, dans laquelle environ 80 à 95 % en poids d'ATH sont inclus dans la composition de résine époxy A, sur la base du poids total de la composition de résine époxy A ; et dans laquelle environ 80 à 95 % en poids d'ATH sont inclus dans la composition durcissante B, sur la base du poids total de la composition durcissante B.

6. Composition TIM selon une quelconque revendication précédente, dans laquelle la composition de résine époxy A, la composition durcissante B, ou les deux comprennent en outre au moins un accélérateur de durcissement.

7. Composition TIM selon la revendication 6, dans laquelle l'au moins un accélérateur de durcissement est un composé choisi parmi le groupe constitué d'amines tertiaires, de catalyseurs organostanniques, de sels d'ammonium, de catalyseurs phénoliques, de catalyseurs à base d'urée et des mélanges de ceux-ci.

8. Composition TIM selon la revendication 6 ou 7, dans laquelle au moins un accélérateur de durcissement est compris à un niveau d'environ 0,01 à 5 % en poids, sur la base du poids total de la composition TIM.

9. Composition TIM selon une quelconque revendication précédente, dans laquelle l'ATH présente une distribution de taille de particules multimodale.

10. Article comprenant la composition TIM mentionnée dans une quelconque revendication précédente.

11. Article selon la revendication 10 qui comprend en outre un module de batterie formé d'une ou plusieurs cellules de batterie et d'une unité de refroidissement, dans lequel le module de batterie est connecté à l'unité de refroidissement via la composition TIM.
